(19)

Europäisches
Patentamt
European
Patent Office
Office européen
des brevets

(11) **EP 2 148 327 A1**

(12) **EUROPEAN PATENT APPLICATION**

(43) Date of publication:
**27.01.2010 Bulletin 2010/04**

(51) Int Cl.:
*G10L 19/00* (2006.01)      *H04M 3/22* (2006.01)
*H04L 1/20* (2006.01)

(21) Application number: **08170129.4**

(22) Date of filing: **27.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **23.07.2008 US 82856 P**

(71) Applicant: **Telefonaktiebolaget L M Ericsson
(publ)
164 83 Stockholm (SE)**

(72) Inventors:
• **Kilsgård, Martin**
 **21748 Malmö (SE)**
• **Michis, Zoltan**
 **22358 Lund (SE)**
• **Andersson, Magnus**
 **26258 Ängelholm (SE)**
• **Hansson, Roger**
 **21114 Malmö (SE)**

(74) Representative: **Boesen, Johnny Peder
Zacco Denmark A/S
Hans Bekkevolds Allé 7
2900 Hellerup (DK)**

(54)    **A method and a device and a system for determining the location of distortion in an audio
signal**

(57)    The current invention relates to a method of determining the location of distortion in a signal, wherein the method comprises dividing the signal into a number of consecutive frames each comprising a number of consecutive samples starting at respective first consecutive sample; measuring a value of at least one feature of each of the consecutive frames; comparing the values of the at least one feature to form a relationship between a consecutive frame and a frame preceding the consecutive frame; wherein the method further comprises noting the location of the consecutive frame if the relationship fulfils a condition for distortion.

Fig. 3

**Description**

Technical Field of the Invention

The invention relates to a method of determining the location of distortion in a signal. The invention further relates to a corresponding device and system.

Background

In order to search for distortion, e.g. an amplitude spike and/or an undesired pause, in a signal, e.g. an audio signal representing a mobile cellular telephone conversation, prior art devices and methods may require a reference signal strongly related to the signal searched. The reference signal may, for example, be an undistorted version of the signal to be searched.

Thereby, automatic amplitude spike and/or undesired pause detection in, for example large amounts of signals to be searched for pause and/or spikes, remains difficult/impossible to perform using the prior art.

When the signal is an audio signal, the prior art comprises listening to the audio signal in order to determine if any amplitude spikes and/or undesired pauses are included in the audio signal. However, this solution is very time consuming and unreliable due to the human factor i.e. differences in individual perception.

Another prior art method may be to use the perceptual evaluation of speech quality (PESQ) algorithm to determine if any amplitude spikes and/or undesired pauses are included in the audio signal. However, the PESQ algorithm requires a reference signal in order to determine whether an audio signal contains an amplitude spike and/or a pause i.e. the PESQ algorithm requires a signal to be searched for an amplitude spike and/or a pause and further the PESQ algorithm requires an undistorted version of the signal to be searched in order to determine whether the signal to be classified is distorted or not. Thereby, automation of the PESQ algorithm for amplitude spike and/or pause detection is difficult.

Thus, it would be advantageous to be able to, for example, automatically determine whether a signal contains an amplitude spike and/or an undesired pause.

Summary

The above and other advantages are obtained by a method of determining the location of distortion in a signal, wherein the method comprises dividing the signal into a number of consecutive frames each comprising a number of consecutive samples starting at a respective first consecutive sample; measuring a value of at least one feature of each of the consecutive frames; comparing the values of the at least one feature to form a relationship between a consecutive frame and a frame preceding the consecutive frame; wherein the method further comprises noting the location of the consecutive frame if the relationship fulfils a condition for distortion.

Thereby, the invention is able to determine in what frame a distortion occurs by dividing the signal into a number of frames and based on a comparison between a current frame and a preceding frame, determine whether the preceding frame or current frame is distorted by determining whether a relationship between a value of a feature of the consecutive frame and a value of the feature of the preceding frame fulfils a condition for distortion e.g. a amplitude spike condition; thereby automatic detection of an amplitude spike or an undesired pause is enabled.

In an embodiment, the at least one feature of each of the consecutive frames corresponds to an amplitude flux feature and/or a sample distance measure feature and/or a mean amplitude approximation feature.

Thereby, high precision in amplitude spike and/or undesired pause detection may be obtained using these features.

In an embodiment, the method further comprises determining a mean amplitude approximation value and if the distortion to be located is an amplitude spike, then selecting consecutive samples with a signal-amplitude smaller than or equal to the mean amplitude approximation value and attributing a signal-amplitude equal to the mean amplitude approximation value to the selected consecutive samples; and if the distortion to be located is a pause, then selecting the consecutive samples with a signal-amplitude smaller than one percent of the mean amplitude approximation value and attributing a signal-amplitude equal to one percent of the mean amplitude approximation to the selected consecutive samples.

Thereby, the invention is able to, for example, prevent a large number of signal-amplitudes fluctuations, which may occur when the signal-amplitude is low, from falsely being detected as distortions. Further, the invention may be able to, for example, reduce processing power required for a test device in order to detect an amplitude spike due to the number of samples with similar (e.g. identical) valued signal-amplitudes.

In an embodiment, the noting the location of the consecutive frame further comprises, if the condition for distortion corresponds to the relationship being larger than a threshold value, then noting the consecutive frame as an amplitude spike; and, if the condition for distortion corresponds to the relationship being smaller than a threshold value, then noting the consecutive frame as a pause.

Thereby, the invention may determine which frames contain an amplitude spike e.g. if the condition for distortion corresponds to a relationship being larger than a threshold value e.g. $\frac{AF(F2)}{AF(F1)} > T_{AF}$ and $\frac{SDM(F2)}{SDM(F1)} > T_{SDM}$, and which frames contain an undesired pause e.g. if the condition for distortion corresponds to a relationship being smaller than a threshold value e.g. $\frac{AF(F2)}{AF(F1)} < T_{AF}$ and $\frac{SDM(F2)}{SDM(F1)} < T_{SDM}$.

In an embodiment, the method further comprises performing the dividing and the measuring and the comparing and the noting on a number of second consecutive frames comprising a second number of consecutive samples, wherein the second number of consecutive samples starts at an offset from the first consecutive sample.

Thereby, the invention is able to perform a sliding window detection comprising a first window and a second window spaced apart from the first window whereby detection of location of a distortion may be improved.

In an embodiment, the offset is larger than or equal to one consecutive sample and smaller than the number of consecutive samples contained in a consecutive frame.

Thereby, the windows of the sliding window may be spaced by at least one sample and at most the number of samples in a frame. Thus, the coarseness of the sliding window may be set from a minimum value (one sample) to a maximum value (number of samples in a frame) whereby processing power may be reduced when the coarseness is increased and the accuracy may be increased when the coarseness is reduced.

In an embodiment, the method further comprises repeating performing the dividing, the measuring, the comparing and the noting on a set of consecutive frames determined as comprising the consecutive frames starting with a first consecutive sample equal to a sum of the number of the consecutive sample at the beginning of a first consecutive frame and an integer multiplied with the offset until the sum (310) is larger than or equal to the number of consecutive samples in a consecutive frame.

Thereby, the invention is able to perform a sliding window of coarseness ranging from minimum coarseness (a frame spacing of one sample in the sliding window when the offset is equal to zero i.e. minimum coarseness) to maximal coarseness (a frame spacing equalling the number of samples in a frame when sum equals or exceeds the number of consecutive samples in a consecutive frame).

As mentioned, the invention also relates to a device for determining the location of distortion in a signal, wherein the device comprises at least one processor adapted to dividing the signal into a number of consecutive frames each comprising a number of consecutive samples starting at respective first consecutive sample; and adapted to measuring a value of at least one feature of each of the consecutive frames; and adapted to comparing the values of the at least one feature to form a relationship between a consecutive frame and a frame preceding the consecutive frame; and wherein the device is further adapted to noting the location of the consecutive frame if the relationship fulfils a condition for distortion.

The device and embodiments thereof correspond to the method and embodiments thereof and have the same advantages for the same reasons.

Embodiments of the present invention also relates to a system for determining the location of distortion in a signal, the system comprising a device according the invention and wherein the system further comprises a mobile communication device connected to said device via a wireless and/or wired communication link.

The system and embodiments thereof correspond to the device and embodiments thereof and have the same advantages for the same reasons.

Brief description of the drawings

The invention will now be described more fully below with reference to the drawings, in which

Figure 1 shows an embodiment of a method of determining distortion in a signal.

Figure 2 shows an embodiment of a method of determining an amplitude spike and/or an undesired pause in a signal.

Figure 3 shows an embodiment of a method of determining a distortion in a signal comprising a sliding window.

Figure 4 shows an embodiment of a test device.

Figure 5 shows an embodiment of a signal divided into an number of frames and samples.

Figure 6 shows a system comprising a test device and a mobile communication device.

Figure 7 shows an example of an undesired pause and a desired pause in an audio signal.

Figure 8 shows an example of an amplitude spike in an audio signal.

Detailed description

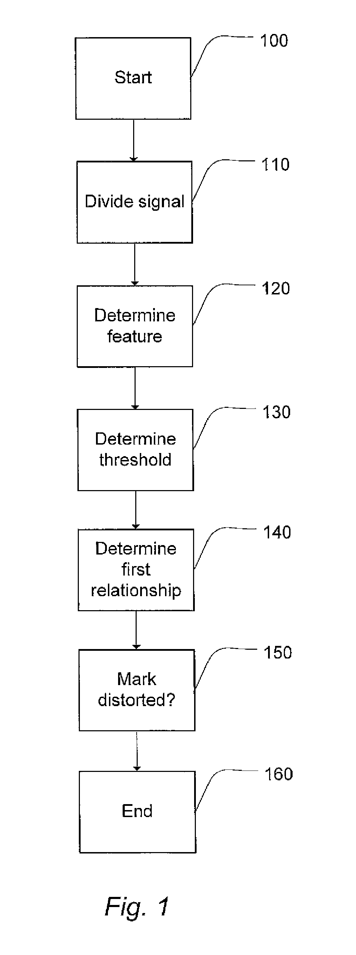

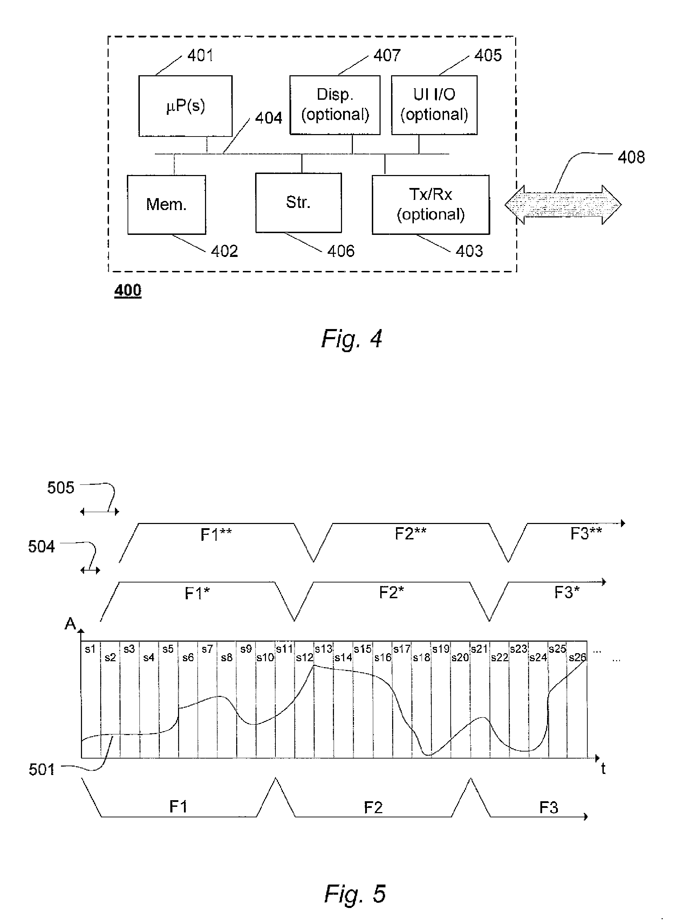

Figure 1 shows an embodiment of a method of determining distortion in a signal.
The method starts in step 100.
In step 110, a test device may divide, e.g. in the one or more microprocessors 401, a signal 501 into a number of consecutive frames F1 - F3, each consecutive frame comprising a number of consecutive samples s1 - s26 starting at a first consecutive sample s1 at the beginning of a first consecutive frame.
The number of frames F1 - F3 may, for example, comprise the same number of samples e.g. each frame F1 - F3 may comprise 10 samples such that frame F1 comprises samples s1 - s10 and frame F2 comprises samples s11 - s20, etc., as illustrated in Figure 5.
The signal 501 may, for example, comprise information regarding an amplitude A of e.g. an audio sequence versus time t. Alternatively or additionally, the signal may comprise information regarding a frequency of the audio sequence versus time. Alternatively or additionally, the signal may comprise any type of information regarding any type of sequence such as, for example, a video sequence or an audio sequence.
The samples may be equidistantly spaced along the time-axis t i.e. the samples may be the same length in time. For example, a signal 501 sampled with 8kHz sampling frequency may have a width of the samples s1 - s26 of 0.125ms.
In step 120, the test device may measure, e.g. in the at least one microprocessor 401, a value of at least one feature of each of the consecutive frames e.g. the test device may measure at least one feature of each of the consecutive frames F1 - F3. For example, the test device may measure a number of features in the time domain such as an amplitude flux (AF) feature and/or a sample distance measure (SDM) feature and/or mean amplitude approximation (MAA).
The amplitude flux feature may describe how the amplitude of a signal 501 varies in time. To measure the amplitude flux feature, the signal may firstly be divided, e.g. by the test device, into a number of frames F1 - F3, wherein each frame F1 - F3 comprises a number of sample s1 - s26. Secondly, the test device may, e.g. in a processor, determine a first sample from each frame with the greatest amplitude A. The first sample of each of the frames s1 - s26 may subsequently be used to represent the signal 501. Thereby, the test device may provide a representation of the signal 501 which highlights drastic and lasting variations in the amplitude of the signal. The amplitude flux (AF) may be determined as: $y(i) = \max(x_i)$, where i = 0, 1, 2, ..., N, where N may represent the number of the last frame which the signal 501 has been divided into. $y(i)$ may represent the maximum amplitude of the frame $x_i$.
The sample distance measure feature may define a 1-norm Euclidian distance between two consecutive samples in the signal 501. The test device may measure the sample distance measure between two consecutive samples as: $d_k = |x(k) - x(k-1)|$, where $d_k$ is determined as the absolute value of the difference between a vector x(k) representing sample k and a vector x(k-1) representing sample k-1. $d_k$ may further be determined as

$$d_k = |x(k) - x(k-1)| = \sum_{i=1}^{n} |x_i(k) - x_i(k-1)|,$$ where $x_i(k)$ represents the i'th component of the vector x(k) and the summation is performed over all components of the vector x(k). The test device may further determine a sample distance measure D between K samples as $D = \sum_{k=1}^{K} d_k$ .

In step 130, the test device may determine, e.g. in the at least one microprocessor 401, a threshold value for each of the at least one features. For example, the test device may determine a first threshold value for the AF feature and/or a second threshold value for the SDM feature. Alternatively or additionally, a threshold value for each of the at least one features may be input by an operator into the test device.
Frames comprising features, e.g. AF and/or SDM, with values below a first threshold value may, for example, represent a first type of distorted frames. Alternatively or additionally, frames comprising features, e.g. AF and/or SDM, with values above a second threshold value may, for example, represent a second type of distorted frames.
In an example, the threshold value for each of the at least one features may be determined via an empirical test on a number of signals whereby a range of feature differences between the first and the second frames may be determined.

For example, via empirical tests the test device may determine a threshold value for each of the at least one features in order to determine an undesired pause in an audio signal.

Alternatively or additionally, the test device may, for example, via empirical tests determine a threshold value for each of the at least one features in order to determine an amplitude spike in an audio signal.

In step 140, the test device may compare, e.g. in the at least one microprocessor 401, the values of the at least one feature to form a relationship between a consecutive frame F2 and a frame F1 preceding the consecutive frame.

For example, the test device may determine a ratio between a number of features of a consecutive frame F2 and the number of features of a frame F1 preceding the consecutive frame, respectively. Alternatively or additionally, the test device may determine a difference between a number of features of a consecutive frame F2 and the number of features of a frame F1 preceding the consecutive frame, respectively.

For example, the test device may determine the ratio between the AF of a frame F2 and the AF of frame F1

e.g. $\dfrac{AF(F2)}{AF(F1)}$ i.e. the test device may compare the AF of a first frame F1 to the AF of a second frame F2. Alternatively or additionally, the test device may determine the difference between the SDM of a frame F2 and the SDM of frame F1 e.g. $SDM(F2) - SDM(F1)$.

In step 150, the test device may note, e.g. in the memory 402 and/or in the storage device 406, the location of the consecutive frame if the relationship fulfils a condition for distortion i.e. the test device may mark the consecutive frame as distorted if at least one second relationship between at least one first relationship of a feature and the threshold value for the respective at least one feature is included in a first set of relations.

For example, in step 130, the test device may have determined a threshold value for AF, $T_{AF}$, and SDM, $T_{SDM}$, said threshold value representing for example undesired pauses in an audio signal.

In step 140, the test device may, for example, have determined $\dfrac{AF(F2)}{AF(F1)}$ and $\dfrac{SDM(F2)}{SDM(F1)}$.

In step 150, the test device may, for example, compare $\dfrac{AF(F2)}{AF(F1)}$ to $T_{AF}$ and $\dfrac{SDM(F2)}{SDM(F1)}$ to $T_{SDM}$. The first set of relations may be adapted to determine undesired pauses and therefore, the first set of relations may comprise the relations smaller than ($<$) and smaller than or equal to ($\leq$). If, for example, both $\dfrac{AF(F2)}{AF(F1)}$ $<$ or $\leq$ to $T_{AF}$ and

$\dfrac{SDM(F2)}{SDM(F1)}$ $<$ or $\leq$ to $T_{SDM}$, then the test device may determine that the consecutive frame F2 comprises an undesired pause. Subsequently, the test device may mark the consecutive frame F2 as comprising an undesired pause and thus that consecutive frame F2 is distorted.

Alternatively or additionally, the test device may, for example, in step 130 have determined a threshold value for AF, $T_{AF}$, and SDM, $T_{SDM}$, said threshold value representing for example amplitude spikes in an audio signal.

In step 140, the test device may, for example, have determined $\dfrac{AF(F2)}{AF(F1)}$ and $\dfrac{SDM(F2)}{SDM(F1)}$.

In step 150, the test device may, for example, compare $\dfrac{AF(F2)}{AF(F1)}$ to $T_{AF}$ and $\dfrac{SDM(F2)}{SDM(F1)}$ to $T_{SDM}$. The first set of relations may be adapted to determine amplitude spikes and therefore, the first set of relations may comprise the relations greater than ($>$) and greater than or equal to ($\geq$). If, for example, both $\dfrac{AF(F2)}{AF(F1)}$ $>$ or $\geq$ to $T_{AF}$ and

$$\frac{SDM(F2)}{SDM(F1)} \geq \text{or} \geq \text{to } T_{SDM}$$ then the test device may determine that the frame F1 preceding the consecutive frame F2 comprises an amplitude spike. Subsequently, the test device may mark the frame F1 preceding the consecutive frame F2 as comprising an amplitude spike and thus that the preceding frame F1 is distorted.

In step 160, the method ends.

In an embodiment, the test device may further perform a step of preprocessing the signal, wherein the pre-processing comprises removing any eventual DC offset of the signal. The DC offset may, for example, be removed by calculating the mean amplitude of the signal $MA = \frac{1}{N} \sum_{n=0}^{N-1} x(n)$, where MA is the mean amplitude and N is the number of samples and x(n) is the amplitude of sample n, and subtract the mean amplitude from each sample $x_{noDC}(n) = x(n) - MA$, where n= 0, 1, 2, ..., N - 1. The step of preprocessing may, for example, be performed by the test device prior to step 110.

In an embodiment, steps 130 and 140 may be performed in a single step e.g. step 140*.

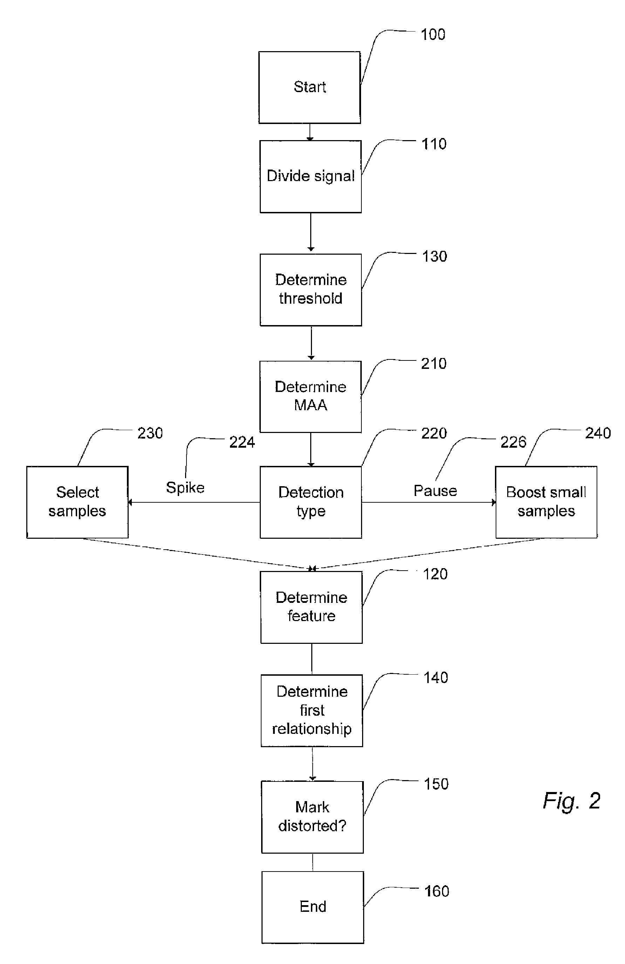

Figure 2 shows an embodiment of a method of determining an amplitude spike and/or an undesired pause in a signal.

The method starts in step 100. Steps 110 and 130 of Figure 2 may be identical to steps 110 and 130 of Figure 1.

In step 210, the test device may determine a mean amplitude approximation feature of the signal. The mean amplitude approximation may be defined as a modified version of a signal's overall mean amplitude. The signal may firstly be divided, e.g. by the test device, into a number of frames F1 - F3, wherein each frame F1 - F3 comprises a number of samples s1 - s26. The test device may, e.g. in a processor, determine a first sample from each frame, which first sample has the greatest amplitude A within the respective frame. Secondly, the test device may determine a set comprising the samples with the greatest amplitude from each frame. Thirdly, the test device may sort the samples in the set from a sample corresponding to the lowest amplitude to a sample corresponding to the highest amplitude. Fourthly, the test device may select the middle third of the sorted samples. Fifthly, the test device may determine the MAA feature by calculating the mean of the samples in the extracted middle third, for example the calculating may be performed in a processor of the test device.

In step 220, the test device may determine what type of distortions should be determined i.e. whether amplitude spikes and/or undesired pauses should be detected in a signal 501.

For example, the test device may be adapted to determine both amplitude spikes and undesired pauses. Alternatively, the test device may be adapted to determine whether amplitude spikes and/or undesired pauses should be determined based on a random selection of either or both of the distortion types. Alternatively, an operator may select, e.g. via a user input/output device connected to or contained in the test device, which of the distortion types should be determined.

If the test device in step 220 determines that at least one amplitude spike is to be searched for 224, then step 230 may subsequently be performed and if the test device in step 220 determines that at least one undesired pause is to be performed 226, then step 240 may subsequently be performed.

In step 230, the test device may select the samples comprising an amplitude A which is larger than the MAA feature determined in step 210 for further processing e.g. in steps 120, 140 and 150. Thereby, the method may prevent false detection of large percentage amplitude fluctuations which, for example, may occur in low amplitude frames of a signal 501, e.g. in the noise floor of the signal, as amplitude spikes.

In step 120, the test device may determine at least one feature of each of the consecutive frames F1 - F3. For example, the test device may determine a number of features in the time domain such as an amplitude flux (AF) feature and/or a sample distance measure (SDM) feature. Due to the possible selection of a number of samples for further processing in step 230, the test device may reduce processing requirements by placing step 120 after the selection step 230.

Alternatively, the test device may determine at least one feature of each of the consecutive frames F1 - F3 (step 120) on all the samples in the consecutive frames F1 - F3 and the step may be performed after step 110 and before step 130, as e.g. disclosed under Figure 1.

Steps 140 and 150 may be identical to steps 140 and 150 of Figure 1.

The method ends in step 160.

In step 240, the test device may select the samples with an amplitude value less than one percent of the MAA feature determined in step 210 and assign a value equal to one percent of the MAA feature to these samples. Thereby, the method may prevent false detection of large percentage amplitude fluctuations which, for example, may occur in low amplitude frames of a signal 501, e.g. in the noise floor of the signal, as undesired pauses.

In step 120, the test device may determine at least one feature of each of the consecutive frames F1 - F3. For example, the test device may determine a number of features in the time domain such as an amplitude flux (AF) feature and/or a sample distance measure (SDM) feature. Due to the possible assignment of a similar value, e.g. the 0.01*MAA value, to a number of samples during processing of step 240, the test device may reduce processing requirements by placing step 120 after the assignment of step 230.

Steps 140 and 150 may be identical to steps 140 and 150 of Figure 1.

The method ends in step 160.

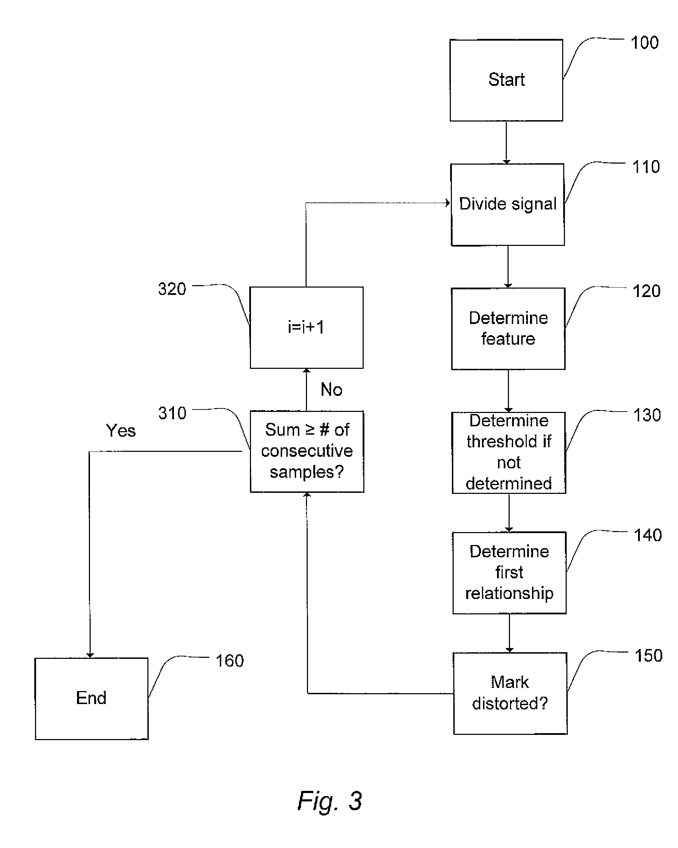

Figure 3 shows an embodiment of a method of determining a distortion in a signal comprising a sliding window.

The method starts in step 100 in which step the test device may create a counter i and initialize the counter to zero.

In step 110, a test device may divide a signal 501 into a first window comprising a first number of consecutive frames F1 - F3, each consecutive frame comprising a number of consecutive samples s1 - s26, e.g. 10 consecutive samples s1 - s10, starting at a first consecutive sample s1 at the beginning of a first consecutive frame.

Additionally, the test device may in step 110 determine a sum parameter equal to the position of a first sample s1 of a first frame F1 in the number of samples s1 - s10 added to the counter i multiplied with an offset 504, 505.

The offset 504, 505 may be a positive integer representing the coarseness of the sliding window i.e. the distance between a first window F1, F2, F3, etc. and a second window F1*, F2*, F3*, etc. or F1**, F2**, F3**, etc. in the sliding window. The offset 504, 505 may, for example, represent the difference in position between the first sample s1 of the first window F1, F2, F3 and a first sample s2 of a second widow comprising a second number of consecutive frames F1*, F2*, F3* or a first sample s3 of a third window comprising a third number of consecutive frames F1**, F2**, F3**, etc.

In Figure 5, for example, the offset 504 between the first window and the second window is 1 and the offset 505 between the first window and the third window is 2. The offset 504, 505 may be larger than or equal to one and smaller than the number of consecutive samples in a frame. For example, the number of samples in a frame in Figure 5 is 10.

Thus, the sum parameter for the first window may thus be determined to be equal to 1 + 0 * offset = 1 and thus the first consecutive sample in the first consecutive frame in the first window is s1.

Steps 120 - 150 of Figure 3 may be identical to steps 120 - 150 of Figure 1.

In step 310, the test device may test whether the sum parameter of the actual window i.e. the first window comprising consecutive frames F1, F2, F3, etc. is larger than or equal to the number of consecutive samples in a consecutive frame i.e. 10.

If the sum parameter is larger than or equal to the number of consecutive samples in a frame, the method continues to step 160, in which it ends.

If the sum parameter is smaller than the number of consecutive samples, the test device may increase the counter by 1 in step 320 and continue to a second execution of step 110 using the increased value of the counter i. For example, the counter i may be increased by 1 thus resulting in a value of i = i + 1 = 0 + 1 = 1.

Thereby, the test device may, for example, repeat the steps 110 - 150 until the sum parameter is larger than or equal to the number of consecutive samples in a frame.

Figure 4 shows an embodiment of a test device 400. The test device 400 may comprise one or more microprocessors 401 connected with a main memory 402 and e.g. a storage device 406 via an internal data/address bus 404 or the like. Additionally, the test device 400 may also be connected to or comprise a display 407 and/or communication means 403, e.g. a receiver and transmitter unit, for communication with one or more remote systems via one or more wireless and/or wired communication links 408 such as, for example, a Bluetooth communication link, a WLAN communication link, an Infrared communication link, a fiber-optical communication link or the like. The test device 400 may additionally comprise a user interface input/output unit 405 through which an operator may interact with the test device 400. Examples of user interface input/output units are a computer mouse and a computer keyboard.

The test device 400 may, for example, receive a number of signals, which are to be determined whether they include amplitude spikes and/or undesired pauses, via said communication means 403.

The memory 402 and/or storage device 406 may store and retrieve the relevant data together with executable computer code for providing the functionality according to the invention. For example, the memory 402 and storage device 406 may be used by the test device 400 to store the received number of signals. Additionally, the test device may use the memory 402 and/or storage device 406 to store executable computer program code such as, for example, computer program code enabling the one or more microprocessors 401 to perform the steps according to any of the methods above e.g. the computer program code may enable the one or more microprocessors 401 to calculate one or more features from the number of signals, such as for example an AF feature and/or an SDM feature and/or a MMA feature and/or a threshold value for each of the one or more features.

The storage device 406 comprises one or more storage devices capable of reading and possibly writing blocks of data, e.g. a DVD, CD, optical disc, PVR, etc. player/recorder and/or a hard disk (IDE, ATA, etc.), floppy disk, smart card, PC card, USB storage device, etc.

The memory 402 may be a semiconductor type of storage device such as for example random access memory e.g. SRAM and/or DRAM, flash memory or the like.

The micro-processor(s) 401 may be responsible for generating, handling, processing, calculating, etc. the relevant parameters according to the present invention. The micro-processor(s) 401 may, for example, execute computer program code stored in e.g. the memory 402 enabling the micro-processor(s) 401 to perform actions such as, the steps contained in one or more of the methods disclosed above. Thereby, the micro-processor(s) 401 may, for example, execute computer program code stored in e.g. the memory 402 enabling the micro-processor(s) 401 to perform actions such as, calculating one or more features from the number of signals and/or a calculating a threshold value for each of the one or more features and/or determining a relationship between a feature of a consecutive frame F2 and the feature of a frame F1 preceding the consecutive frame and/or marking a consecutive frame as comprising an amplitude spike and/or an undesired pause.

The micro-processor(s) 401 may perform such actions by, for example, retrieving the computer program code for the respective actions from e.g. the memory 402 and/or storage device 406 and apply the actions to the signals stored in the memory 402 and/or storage device 406.

The display 407, e.g. a CRT and/or LCD screen, may, for example, be responsible for displaying to an operator of the test device a status of a signal e.g. whether a frame of the signal comprises an undesired pause and/or an amplitude spike. Additionally or alternatively, the display 407 may display information regarding processing status. Alternatively or additionally, the display 407 may display a graphical representation of the position in the signal of a frame containing an amplitude spike and/or an undesired pause.

The user interface input/output unit 405, e.g. a computer keyboard or a computer mouse, may enable an operator of the test device 400 to input to the test device a threshold value for a feature.

Figure 5 shows an embodiment of a signal divided into an number of frames and samples.

In the figure, 501 represents a signal such as, for example, an audio signal or a video signal. The amplitude A of the signal may be plotted versus time t. The signal 501 may be divided, e.g. by the test device, into a number of frames F1, F2, F3, F1*, F2*, F3*, F1**, F2**, F3**, etc. Each of the frames may comprise a number of samples s1 - s26. For example, each of the frames may comprise the same number of samples e.g. 10 samples per frame.

Additionally, the signal 501 may be divided into a number of windows, wherein each window comprises a number of frames. For example, a first window may comprise frames F1, F2, F3, and a second window may comprise frames F1*, F2*, F3*, and a third window may comprise frames F1**, F2**, F3**, etc.

The windows may define a sliding window such that, for example, the method of Figure 3 may first perform the steps 110 - 150 on the first window, then on the second window and subsequently on the third window, etc., until the sum parameter is larger than or equal to the number of consecutive samples in a frame which in this case is 10.

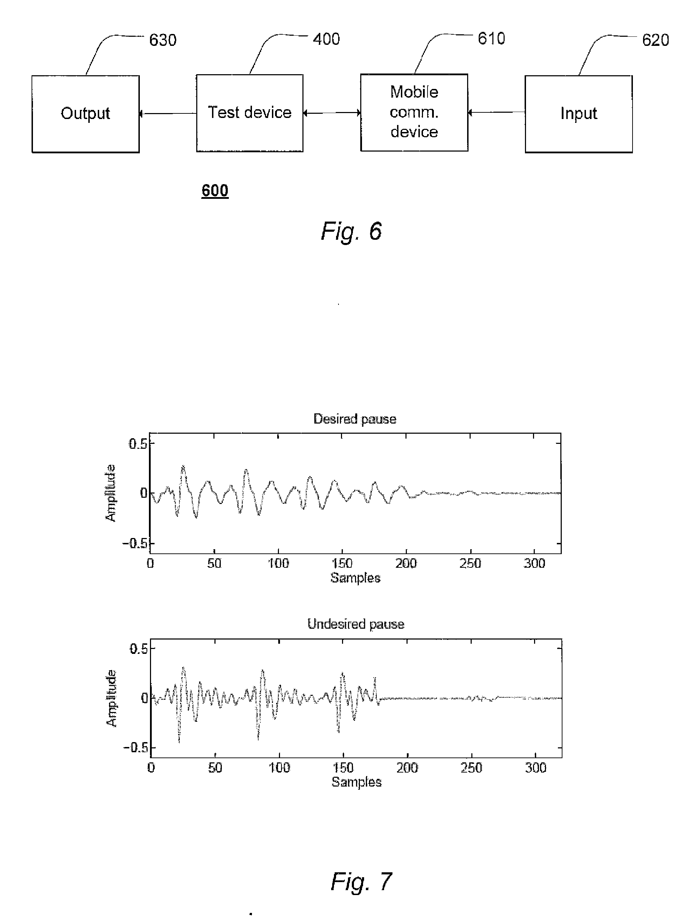

Figure 6 shows a system comprising a test device 400 and a mobile communication device 610 such as a mobile cellular telephone, which mobile communication device 610 may receive an input 620. The test device 400 may output a result 630 containing a classification of the input 620 e.g. whether the input contains an amplitude spike and/or an undesired pause.

For example, the input 620 may comprise a number of audio sequences e.g. two audio sequences such as a sequence comprising a male voice and a sequence comprising a female voice. The audio sequence may be played to the mobile communication device 610 when the mobile communication device 610 is subjected to a number of background noises e.g. at a subway station and at a motorway intersection and in a mall and in a sound proof room etc. Additionally, the input may comprise the audio sequence without any background noise.

The mobile communication device 610 may be connected to the test device 400 via e.g. a wired and/or a wireless communication link and thereby, the test device 400 may record the audio sequences and the background noise via the mobile communication device's microphone in the memory 402 and/or in the storage device 406.

In the test device 400, each of the recorded audio sequences may be classified as distorted or undistorted as disclosed above i.e. classified according to whether they contain an amplitude spike and/or an undesired pause or not. The result of the classification may be output 630 e.g. to an operator of the test device 400.

In an embodiment, the test device 400 may be able to transmit one or more codes to the mobile communication device 610 in order to, for example, correct one or more errors detected by the test device 400 in the mobile communication device 610 via classification of the input 620 recorded by the test device 400 via said mobile communication device's 610 microphone. For example, in response to a detected amplitude spike, the test device 400 may transmit a code to the mobile communication device 610, which code may, for example, change a software routine in the mobile communication device 610 responsible for interpreting input signals from e.g. the microphone of the mobile communication device 610.

Figure 7 shows an example of an undesired pause and a desired pause in an audio signal. Below, the method of Figure 1 is described used on an undesired pause as illustrated in Figure 7.

In the case of the desired pause, the amplitude rings out and displays a smooth transition. In the case of the undesired pause, the amplitude rapidly decreases, resulting in a very abrupt transition.

During undesired pause detection, pre-processing as disclosed above may be performed.

Additionally, as disclosed above in step 110, the test device may divide the input in time domain into a number of successive frames of specific length e.g. 10 samples. This allows identification of fast and unnatural changes in the signal. When searching for undesired pauses in e.g. an audio signal, it may mainly be abrupt changes in amplitude that indicates that a distortion (amplitude spike and/or undesired pause) has occurred. In order to detect an undesired pause (and/or an amplitude spike), overlapping sliding frames (sliding window) may be utilized.

The size if the frame and the size of the undesired pause one wants to detect may be correlated. A high detection rate may be found if, for example, the frame size (i.e. the number of samples in the frame) is approximately the size of the undesired pause (i.e. the number of samples contained in the undesired pause).

Alternatively, the frame size may be smaller than the size of the undesired pause. However, when the frame size gets small, e.g. in the order of 5 ms or less, the resolution gets to high and local, short desired pauses may be detected as undesired pauses.

The frame size is, like the offset between the frames in the sliding window, not fixed and can be modified to fit undesired pauses of different length. For example, in order to detect undesired pauses of varying length e.g. approximately 10 ms and longer, a frame size of 35 samples may be utilized at 8 kHz i.e. approximately 4ms frame size. The frame size must be smaller (e.g. 4ms) than the pause (e.g. 10ms) to be detected.

As disclosed above, features of the signal 501 may be determined in step 120. For example, AF and SDM and MAA features may be determined.

The AF feature may be linked with the characteristics of an undesired pause, due to the fact that the amplitude of the signal may take a radical dip around an undesired pause.

The SDM feature may be designed to prevent false detections i.e. classification of undesired pauses as desired pauses or vice versa. For example, certain vowels may produce sections of the signal 501 with the same characteristics as an undesired pause and without the use of SDM, such sections may falsely be characterized as undesired pauses.

The MAA may be used to, for example, prevent small amplitude part of the signal 501 to be classified as undesired pauses. When the amplitude of the signal 501 becomes is low e.g. below 1% of the MAA feature value, the AF may become very large. To avoid false classification, all samples with amplitude lower than 1 percent of the MAA feature value may therefore be elevated up to 1 percent of the MMA feature value.

After preprocessing and feature determination (steps 110 and 120) have been completed, an analysis part 130 - 150 may begin.

The analysis part may be performed by comparing the features extracted from one frame n with the features extracted from a previous frame e.g. n - 1.

By determining a relationship between features of two consecutive frames, fast and unnatural changes in the signal content may be detected. Thus, for example, if the AF relationship is large and the SDM relationship also is substantial then an undesired pause may have occurred in frame n.

Through empirical tests, a range of feature relationships, e.g. feature differences and/or feature ratios between features of a two consecutive frames, at e.g. undesired pauses may be determined thereby characterizing the feature relationships at e.g. the undesired pauses. Thereby, the accuracy of the method described above may be increased.

The empirical tests may further provide a number of scaling factors (threshold values). In the case of undesired pause detection, for example, it may be determined that if the values of the features of a current frame n are smaller than the values of the features of the previous frame n - 1, possibly multiplied with the scaling factor for the respective features and possibly calculated as a percentage, then an undesired pause may have occurred in the signal 501 at frame n.

An example of the scaling factors may be

| Current frame n | Relationship | Scaling factor | Previous frame n - 1 |
|---|---|---|---|
| AF | < | 0,12 | AF |
| SDM | < | 0,10 | SDM |

Thus, the method may characterize a current frame n as containing an undesired pause every time both these criteria are fulfilled. The test device may subsequently output the current frame n at which the undesired pause has occurred.

Thereby, the location of undesired pauses within a large audio stream may be determined automatically.

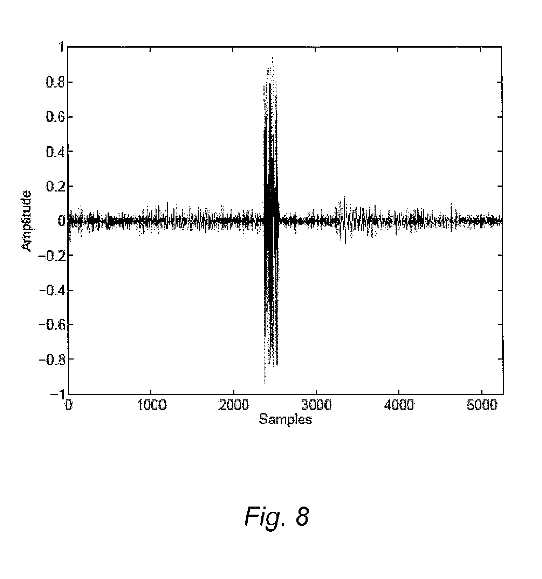

Figure 8 shows an example of an amplitude spike in an audio signal. An amplitude spike may indicate a fault in e.g. a piece of hardware, e.g. a mobile communication device such as a mobile cellular telephone, and/or a piece of software. Below, the method of Figure 1 is described used on an amplitude spike as illustrated in Figure 8.

During amplitude spike detection, pre-processing may be performed as disclosed above.

Further, signal division and feature determination according to step 110 and 120 may be performed.

In order to avoid classifying local spikes that may be part of e.g. human speech as amplitude spikes, the frame size defined in step 110 may in amplitude spike detection be e.g. approximately 20 - 50 ms long.

As disclosed above, features of the signal may be determined in step 120. For example, AF and SDM and MAA features may be determined.

After preprocessing and feature determination (steps 110 and 120) have been completed, an analysis part 130 - 150 may begin.

The analysis part may be performed by comparing the features extracted from one frame n with the features extracted from a subsequent frame e.g. n + 1.

An amplitude spike may be empirically defined to be, in a number of cases, at least 1.5 times the MAA feature value in a frame. Otherwise the frame may be considered as a natural variation of the signal.

Thus, a frame containing an AF feature being equal to or greater than 1.5 times the MAA feature value may be a frame containing a potential amplitude spike. However, using the MAA feature as sole basis for decision to identify amplitude spikes in a signal may be insufficient as natural variations in a signal may give rise to AF features above the MAA threshold value.

In an aspect, a large number of amplitude spikes contained in e.g. a first audio signal may give rise to a large MAA threshold value compared to a MAA threshold value of a second audio signal corresponding to the first audio signal without the large number of amplitude spikes. In such an aspect, the MAA threshold value may be scaled by a factor e.g. smaller than 1.

For example, if an operator visually determines that e.g. the amplitude of an audio signal comprises a large number of amplitude spikes, then the operator may activate a button or the like connected to the test device indicating to the test device that the audio signal comprises a large number of amplitude spikes and therefore, the MMA may be required to be scaled by a factor less than one.

In an aspect, in order to prevent false amplitude spike detection, the frame located after a potential amplitude spike frame may be analyzed.

The scaling factor between the frame possibly containing an amplitude spike, frame n, and the consecutive frame, frame n + 1, may be important in order to maintain a proper balance between false detections, i.e. normal frames classified as amplitude spikes, and undetected amplitude spikes.

A high scaling factor may cause less false detections but may increase the number of undetected amplitude spikes and vice versa. The AF scaling factor, may be set to 25% to eliminates substantially all false detections however this may cause some amplitude spikes to go undetected.

The SDM feature may be introduced to handle the remaining errors when the AF scaling factor is set to 25%. Besides having high amplitudes, amplitude spikes tend to switch between positive and negative amplitudes quickly. Thus, a frame n containing an amplitude spike may display a higher SDM feature value than the next frame n + 1. If the SDM value extracted from the next frame, n + 1, is e.g. at least 60% smaller than the frame possibly containing an amplitude spike, frame n, then the test device may determine that an amplitude spike has occurred in frame n.

The combination of these three features, AF and SDM and MAA, together with properly chosen threshold values may provide an effective and precise amplitude spike detection method.

An example of the scaling factors for amplitude spike detection may be $AF_n > 1.50 * MAA$ and $AF_{n+1} < 0.25 * AF_n$ and $SDM_{n+1} < 0.60 * SDM_n$.

Although various embodiments of the present invention have been described and shown, the invention is not restricted thereto, but may also be embodied in other ways within the scope of the subject-matter defined in the following claims.

In general, any of the technical features and/or embodiments described above and/or below may be combined into one embodiment. Alternatively or additionally any of the technical features and/or embodiments described above and/or below may be in separate embodiments. Alternatively or additionally any of the technical features and/or embodiments described above and/or below may be combined with any number of other technical features and/or embodiments described above and/or below to yield any number of embodiments.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. A method of determining the location of distortion in a signal, wherein the method comprises

   • dividing (110) the signal into a number of consecutive frames each comprising a number of consecutive samples starting at a respective first consecutive sample;
• measuring (120) a value of at least one feature of each of the consecutive frames;
• comparing (140) the values of the at least one feature to form a relationship between a consecutive frame and a frame preceding the consecutive frame;
• wherein the method further comprises noting (150) the location of the consecutive frame if the relationship fulfils a condition for distortion.

2. The method according to claim 1, wherein the at least one feature of each of the consecutive frames corresponds to an amplitude flux feature and/or a sample distance measure feature and/or a mean amplitude approximation feature.

3. The method according to claim 1 or claim 2, wherein the method further comprises determining (210) a mean amplitude approximation value and

• if the distortion to be located is an amplitude spike (224), then selecting (230) consecutive samples with a signal-amplitude smaller than or equal to the mean amplitude approximation value and attributing a signal-amplitude equal to the mean amplitude approximation value to the selected consecutive samples; and
• if the distortion to be located is a pause (226), then selecting the consecutive samples (240) with a signal-amplitude smaller than one percent of the mean amplitude approximation value and attributing a signal-amplitude equal to one percent of the mean amplitude approximation to the selected consecutive samples.

4. The method according to anyone of claims 1 to 3, wherein the noting the location of the consecutive frame further comprises

• if the condition for distortion corresponds to the relationship (140) being larger than a threshold value then noting the consecutive frame as an amplitude spike;
• if the condition for distortion corresponds to the relationship (140) being smaller than a threshold value then noting the consecutive frame as a pause.

5. The method according to anyone of claims 1 to 4, wherein the method further comprises performing the dividing (110) and the measuring (120) and the comparing (140) and the noting (150) on a number of second consecutive frames comprising a second number of consecutive samples, wherein the second number of consecutive samples start at an offset from the first consecutive sample.

6. The method according to claim 5, wherein the offset is larger than or equal to one consecutive sample and smaller than the number of consecutive samples contained in a consecutive frame.

7. The method according to claim 5 or claim 6, wherein the method further comprises repeating performing the dividing, the measuring, the comparing and the noting on a set of consecutive frames starting with a first consecutive sample equal to a sum of the number of the consecutive sample at the beginning of a first consecutive frame and an integer multiplied with the offset until the sum (310) is larger than or equal to the number of consecutive samples in a consecutive frame.

8. A device (400) for determining the location of distortion in a signal, wherein the device comprises

• at least one processor (401) adapted to dividing (110) the signal into a number of consecutive frames each comprising a number of consecutive samples starting at respective first consecutive sample; and adapted to
• measuring (120) a value of at least one feature of each of the consecutive frames; and adapted to
• comparing (140) the values of the at least one feature to form a relationship between a consecutive frame and a frame preceding the consecutive frame; and
• wherein the device (400) is further adapted to noting the location (150) of the consecutive frame if the relationship fulfils a condition for distortion.

9. A device according to claim 8, wherein the at least one microprocessor (401) is further adapted to determining (210) a mean amplitude approximation value, and

• if the distortion to be located is an amplitude spike (224), then selecting (230) consecutive samples with a signal-amplitude smaller than or equal to the mean amplitude approximation value and attributing a signal-amplitude equal to the mean amplitude approximation value to the selected consecutive samples; and
• if the distortion to be located is a pause (226), then selecting the consecutive samples (240) with a signal-amplitude smaller than one percent of the mean amplitude approximation value and attributing a signal-amplitude equal to one percent of the mean amplitude approximation to the selected consecutive samples.

10. A device according to claim 8 or claim 9, wherein the at least one micro-processor (401) is further adapted to noting the location of the consecutive frame as an amplitude spike

   • if the condition for distortion corresponds to the relationship (140) being larger than to a threshold value; and wherein the micro-processor is further adapted to noting the location of the consecutive frame as an undesired pause
   • if the condition for distortion corresponds to the relationship (140) being smaller than to a threshold value.

11. A device according to anyone of claims 8 to 10, wherein the at least one micro-processor (401) is further adapted to performing the dividing (110) and the measuring (120) and the comparing (140) and the noting (150) on a number of second consecutive frames comprising a second number of consecutive samples, wherein the second number of consecutive samples start at an offset from the first consecutive sample.

12. A device according to claim 11, wherein the at least one microprocessor is further adapted to repeating performing the dividing, the measuring, the comparing and the noting on a set of consecutive frames determined as comprising the consecutive frames starting with a first consecutive sample equal to a sum of the number of the consecutive sample at the beginning of a first consecutive frame and an integer multiplied with the offset until the sum (310) is larger than or equal to the number of consecutive samples in a consecutive frame.

13. A system (600) for determining the location of distortion in a signal, the system comprising a device (400) according to anyone of claims 8 to 12 and wherein the system (600) further comprises a mobile communication device (610) connected to said device (400) via a wireless and/or wired communication link (408).

*Fig. 1*

*Fig. 2*

*Fig. 3*

*Fig. 4*

*Fig. 5*

**Fig. 6**

**Fig. 7**

*Fig. 8*

Europäisches
Patentamt

European
Patent Office

Office européen
des brevets

# EUROPEAN SEARCH REPORT

**Application Number**

EP 08 17 0129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/216260 A1 (PS RAMKUMAR [IN] ET AL) 29 September 2005 (2005-09-29) * figure 4 * * paragraph [0001] * * paragraph [0024] - paragraph [0034] * ----- | 1-13 | INV. G10L19/00 H04M3/22 H04L1/20 |
| X | EP 1 492 085 A (LUCENT TECHNOLOGIES INC [US]) 29 December 2004 (2004-12-29) * figures 4,5 * * paragraph [0016] - paragraph [0022] * ----- | 1,8,13 | |
| X | KAUPPINEN I ED - SKODRAS A N ET AL: "Methods for detecting impulsive noise in speech and audio signals" DIGITAL SIGNAL PROCESSING, 2002. DSP 2002. 2002 14TH INTERNATIONAL CON FERENCE ON SANTORINI, GREECE 1-3 JULY 2002, PISCATAWAY, NJ, USA,IEEE, US, vol. 2, 1 July 2002 (2002-07-01), pages 967-970, XP010600013 ISBN: 978-0-7803-7503-1 * abstract * p. 967, section 2.1, The derivative method p. 969, section 3.2, The median filter ----- | 1,8,13 | |
| X | WO 02/43051 A (FRANCE TELECOM [FR]; LE SAOUT JEAN YVES [FR]; BERNEX ELODIE [FR]; ESTO) 30 May 2002 (2002-05-30) * figures 1,2a * * page 11, line 13 - page 16, line 20 * ----- | 1,8,13 | |

**TECHNICAL FIELDS SEARCHED (IPC)**

G10L
H04M
H04L

The present search report has been drawn up for all claims

| Place of search | Date of completion of the search | Examiner |
|---|---|---|
| Munich | 23 October 2009 | Chétry, Nicolas |

EPO FORM 1503 03.82 (P04C01)

## ANNEX TO THE EUROPEAN SEARCH REPORT
## ON EUROPEAN PATENT APPLICATION NO.

EP 08 17 0129

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2009

| Patent document cited in search report | | Publication date | Patent family member(s) | | Publication date |
|---|---|---|---|---|---|
| US 2005216260 | A1 | 29-09-2005 | NONE | | |
| EP 1492085 | A | 29-12-2004 | CN | 1617222 A | 18-05-2005 |
| | | | JP | 2005018076 A | 20-01-2005 |
| | | | KR | 20050001409 A | 06-01-2005 |
| | | | US | 2004267523 A1 | 30-12-2004 |
| WO 0243051 | A | 30-05-2002 | AU | 2200602 A | 03-06-2002 |
| | | | FR | 2817096 A1 | 24-05-2002 |

EPO FORM P0459

For more details about this annex : see Official Journal of the European Patent Office, No. 12/82